# EUROPÄISCHE PATENTSCHRIFT

(11) **EP 3 060 393 B1**
(45) Veröffentlichungstag und Bekanntmachung des Hinweises auf die Patenterteilung: **09.04.2025**
(21) Anmeldenummer: 14758821.4
(22) Anmeldetag: 22.08.2014
(51) Int. Cl.: B32B 17/10

(54) **VERBUNDSCHEIBE AUS EINER POLYMEREN SCHEIBE UND EINER GLASSCHEIBE**
COMPOUND GLAZING MADE OF A POLYMER PANE AND A GLASS PANE
VITRE COMPOSITE CONSTITUÉE D'UNE VITRE EN POLYMÈRE ET D'UNE VITRE EN VERRE

(30) Priorität: 23.10.2013 EP 13189858
(43) Veröffentlichungstag der Anmeldung: 31.08.2016
(73) Patentinhaber: SAINT-GOBAIN GLASS FRANCE, 92400 Courbevoie (FR)
(72) Erfinder: SIENERTH, Sandra, 52072 Aachen (DE); KREMERS, Stephan, 52525 Heinsberg (DE); GY, René, F-93140 Bondy (FR)
(74) Vertreter: Gebauer, Dieter Edmund
(86) Internationale Anmeldenummer: PCT/EP2014/067902
(87) Internationale Veröffentlichungsnummer: WO 2015/058884

(56) Entgegenhaltungen:
- EP-A1- 0 669 205
- EP-A1- 2 705 951
- WO-A1-2017/196171
- DE-A1- 102012 009 788
- DE-A1- 102012 105 900
- DE-A1- 102012 210 906
- DE-A1- 3 919 290
- DE-A1- 4 415 878
- DE-U1- 202010 008 729
- US-A- 3 525 658
- US-A- 4 201 828

## Beschreibung

Die Erfindung betrifft eine Verbundscheibe aus einer polymeren Scheibe und einer Glasscheibe, ein Verfahren zu deren Herstellung und die Verwendung einer dünnen Glasscheibe in einer solchen Verbundscheibe.

Die Fahrzeugindustrie ist aktuell bemüht, das Gewicht der Fahrzeuge zu reduzieren, was insbesondere mit einem reduzierten Treibstoffverbrauch einhergeht. Ein Faktor, welcher wesentlich zum Gewicht der Fahrzeuge beiträgt und daher ein signifikantes Einsparpotential bietet, ist die Verglasung. Herkömmliche Fahrzeugverglasungen werden durch Glasscheiben realisiert, üblicherweise als Einscheibensicherheitsglas (ESG) oder als Verbundsicherheitsglas (VSG). Unter Einscheibensicherheitsglas versteht man dabei eine einzelne Glasscheibe, welche vorgespannt ist, um die Stabilität und die Größe der Splitter beim Bruch der Scheibe zu beeinflussen. Unter Verbundsicherheitsglas versteht man eine Verbundscheibe aus zwei üblicherweise nicht vorgespannten Glasscheiben, die über eine thermoplastische Zwischenschicht miteinander verklebt sind.

Ein Ansatz, das Gewicht der Fahrzeugverglasung zu reduzieren, ist der Einsatz von Kunststoffscheiben anstelle von Glasscheiben. Kunststoffscheiben weisen aber gegenüber Glasscheiben einige Nachteile auf, insbesondere eine deutlich geringe Kratzfestigkeit, so dass der Ersatz wesentlicher Teile der Fahrzeugverglasung durch Kunststoffscheiben bislang nicht realisiert werden kann.

Zur Erhöhung der Kratzfestigkeit wird in DE4415878A1 vorgeschlagen, die Kunststoffscheibe mit einer dünnen Glasscheibe mittels eines Silikonklebstoffs zu verbinden.

Weiterer Stand der Technik kann US3525658A, DE102012210906A1, DE202010008729U1, US4201828A, EP2705951A1, WO2017/196171A1, DE 102012009788A1 und EP 0669205 A1 entnommen werden.

Der vorliegenden Erfindung liegt die Aufgabe zugrunde, eine weiter verbesserte Fahrzeugscheibe bereitzustellen, welche ein geringes Gewicht und gleichzeitig eine hohe Stabilität und Kratzfestigkeit aufweist, sowie ein Verfahren zu deren Herstellung.

Die Aufgabe der vorliegenden Erfindung wird erfindungsgemäß durch eine Verbundscheibe für Fahrzeuge gemäß Anspruch 1 gelöst. Bevorzugte Ausführungen gehen aus den Unteransprüchen hervor.

Die erfindungsgemäße Verbundscheibe für Fahrzeuge umfasst eine polymere Scheibe (Kunststoffscheibe) und eine mit der polymeren Scheibe flächig verbundene Glasscheibe.

Die erfindungsgemäße Verbundscheibe ist dafür vorgesehen, in einer Fensteröffnung eines Fahrzeugs, den Innenraum gegenüber der äußeren Umgebung abzutrennen. Die dem Innenraum zugewandte Scheibe des Verbundglases wird dabei als Innenscheibe bezeichnet. Die der äußeren Umgebung zugewandte Scheibe wird als Außenscheibe bezeichnet.

Der große Vorteil der Erfindung besteht in der Verbindung einer polymeren Scheibe mit einer sehr dünnen Glasscheibe. Durch die polymere Scheibe, welche in der Regel den größten Teil der Dicke der Verbundscheibe ausmacht, weist die Verbundscheibe ein geringes Gewicht auf. Die Scheibe kann dadurch vorteilhaft zu einer Verringerung des Gesamtgewichts des Fahrzeugs beitragen. Die Glasscheibe ist sehr dünn und führt daher nur zu einer geringen Erhöhung des Gewichts der Scheibe. Trotzdem wird durch die Glasscheibe eine hohe Stabilität und insbesondere Kratzfestigkeit der Scheibe erreicht. Die Glasscheibe verbessert zudem die akustischen Eigenschaften der Scheibe, bewirkt also eine Verringerung der durch die Scheibe hindurchdringende Geräusche, was häufig als Nachteil von Kunststoffscheiben gegenüber Glasscheiben geschildert wird.

Die Glasscheibe ist chemisch vorgespannt. Durch eine Vorspannung kann die Glasscheibe mit einer besonderen Bruchstabilität und Kratzfestigkeit versehen werden. Für eine sehr dünne Glasscheibe, wie sie erfindungsgemäß vorgesehen ist, ist das chemische Vorspannen dabei besser geeignet als das thermische Vorspannen. Da thermisches Vorspannen auf einer Temperaturdifferenz zwischen einer Oberflächenzone und einer Kernzone beruht, setzt thermisches Vorspannen eine Mindestdicke der Glasscheibe voraus. Hinreichende Spannungen können typischerweise mit handelsüblichen thermischen Vorspannvorrichtungen bei Glasdicken ab etwa 2,5 mm erreicht werden. Bei geringeren Glasdicken können in der Regel nicht die allgemein geforderten Werte für die Vorspannung erreicht werden (vgl. beispielsweise die ECE-Regelung 43). Beim chemischen Vorspannen wird durch Ionenaustausch die chemische Zusammensetzung des Glases im Bereich der Oberfläche verändert, wobei der Ionenaustausch durch Diffusion auf eine Oberflächenzone beschränkt ist. Chemisches Vorspannen ist daher besonders für dünne Scheiben geeignet.

Für das chemische Vorspannen sind auch die Bezeichnungen chemisches Tempern, chemisches Härten oder chemisches Verfestigen gebräuchlich. Chemisch vorgespannte Glasscheiben für den Automobilbereich sind beispielsweise aus DE1946358 und GB1339980 bekannt.

Die Stabilität der Glasscheibe kann durch geeignete Werte und lokale Verteilungen der Spannungen, welche im Falle des chemischen Vorspannens durch die Einlagerung von Ionen beim chemischen Vorspannen erzeugt werden, verbessert werden.

In einer vorteilhaften Ausgestaltung weist die Glasscheibe eine Oberflächendruckspannung von größer als 100 MPa, bevorzugt größer als 250 MPa und besonders bevorzugt größer 350 MPa auf.

Die Druckspannungstiefe der Glasscheibe beträgt bevorzugt mindestens ein Zehntel der Dicke der Glasscheibe, bevorzugt mindestens ein Sechstel der Dicke der Glasscheibe, beispielsweise etwa ein Fünftel der Dicke der Glasscheibe. Das ist vorteilhaft im Hinblick auf die Bruchfestigkeit der Scheibe. Die Druckspannungstiefe der Glasscheibe beträgt bei ausreichender Scheibendicke bevorzugt größer als 50 µm, besonders bevorzugt größer als 100 µm. Mit Druckspannungstiefe wird im Sinne der Erfindung die Tiefe gemessen von der Oberfläche der Scheibe bezeichnet, bis zu der die Scheibe Druckspannungen mit einem Betrag größer 0 MPa steht.

Die Glasscheibe weist eine Dicke von kleiner oder gleich 1 mm auf. Scheiben dieser Dicke haben nur ein geringes Gewicht und bewirken dennoch eine hohe Stabilität und Kratzfestigkeit. Die Glasscheibe weist besonders bevorzugt eine Dicke von 0,1 mm bis 1 mm, ganz besonders bevorzugt von 0,2 bis 0,8 mm und insbesondere von 0,4 mm bis 0,7 mm auf. Damit werden besonders gute Ergebnisse im Hinblick auf ein geringes Gewicht und eine hohe Stabilität und Kratzfestigkeit erzielt.

Die polymere Scheibe weist eine Dicke von 1,5 mm bis 10 mm auf, besonders bevorzugt von 2 mm bis 5 mm und ganz besonders bevorzugt von 2,5 mm bis 4 mm, insbesondere von 3 mm bis 4 mm. Mit einer polymeren Scheibe dieser Dicke weist die erfindungsgemäße Scheibe eine ausreichend hohe Stabilität auf, um als Fahrzeugscheibe verwendet zu werden.

Die polymere Scheibe enthält zumindest Polycarbonat (PC), Polymethylmethacrylat (PMMA) oder Copolymere oder Gemische oder Derivate davon, besonders bevorzugt Polycarbonat oder Derivate davon.

Die polymere Scheibe und die Glasscheibe sind über eine thermoplastische Zwischenschicht miteinander verbunden. Die thermoplastische Zwischenschicht kann beispielsweise zumindest Polyvinylbutyral (PVB), Ethylenvinylacetat (EVA), Polyurethan (PU) oder Gemische oder Copolymere oder Derivate davon enthalten. In einer bevorzugten Ausgestaltung enthält die Zwischenschicht Polyurethan oder Derivate davon. Es hat sich überraschend gezeugt, dass diese Materialien für die Zwischenschicht zum Laminieren der Verbundscheibe besonders geeignet sind. Im Vergleich zu anderen thermoplastischen Materialien, insbesondere zum für Verbundscheiben verbreiteten Material PVB, bewirken sie während des Laminiervorgangs eine geringe Diffusion zwischen polymerer Scheibe und Zwischenschicht. Eine solche Diffusion kann zu insbesondere zu verschlechterten optischen Eigenschaften und verschlechterten Haftungseigenschaften führen, was für Fensterscheiben zu vermeiden ist.

Die Dicke der thermoplastischen Zwischenschicht beträgt bevorzugt 0,2 mm bis 1 mm, besonders bevorzugt von 0,3 mm bis 0,9 mm auf, beispielsweise 0,38 mm, 0,76 mm oder 0,86 mm. Die thermoplastische Zwischenschicht wird durch eine einzelne oder durch mehrere thermoplastische Folien ausgebildet.

In einer besonders vorteilhaften Ausgestaltung weist die thermoplastische Zwischenschicht eine geräuschmindernde Wirkung auf. Dadurch kann die Transmission von Geräuschen in den Fahrzeuginnenraum vorteilhaft weiter verringert werden. Die Fahrzeuginsassen werden dadurch weniger durch Umgebungsgeräusche und Fahrgeräusche gestört. Eine solche Wirkung kann durch eine mehrlagige, beispielsweise dreilagige Zwischenschicht erreicht werden, wobei die innere Lage eine höhere Plastizität oder Elastizität aufweist als die sie umgebenden äußeren Lagen, beispielsweise infolge eines höheren Anteils an Weichmachern.

In einer bevorzugten Ausgestaltung der Erfindung ist die Glasscheibe die Außenscheibe der Verbundscheibe. Da beschädigende Einwirkungen insbesondere von der äußeren Umgebung auf Fahrzeugscheiben treffen, ist diese Anordnung besonders vorteilhaft zur Stabilitätssteigerung der Scheibe.

Bei der Erfindung bilden die voneinander abgewandten Oberflächen der Glasscheibe und der polymeren Scheibe die Außenflächen der Verbundscheibe. Hierbei besteht die Verbundscheibe aus der polymeren Scheibe, der Glasscheibe und der thermoplastischen Zwischenschicht zwischen den Scheiben, wobei die genannten Bestandteile allerdings auch mit Beschichtungen versehen sein können. Ein Beispiel für eine solche Beschichtung ist eine kratzfeste Beschichtung auf der Außenfläche der polymeren Scheibe.

In einer alternativen Ausgestaltung, welche nicht Teil der Erfindung ist, ist die von der erfindungsgemäßen (ersten) Glasscheibe abgewandte Oberfläche der polymeren Scheibe mit einer zweiten Glasscheibe flächig verbunden. Beide Oberflächen der polymeren Scheibe sind dabei also mit jeweils einer erfindungsgemäßen Glasscheibe verbunden sind. So werden beide Oberflächen der polymeren Scheibe vor Beschädigungen geschützt. Die zweite Glasscheibe weist bevorzugt eine Dicke von kleiner oder gleich 1 mm auf, besonders bevorzugt von 0,1 mm bis 1 mm, ganz besonders bevorzugt von 0,2 bis 0,8 mm und insbesondere von 0,4 mm bis 0,7 mm. Die zweite Glasscheibe ist bevorzugt ebenfalls chemisch vorgespannt.

Die Glasscheibe kann grundsätzlich jede dem Fachmann bekannte chemische Zusammensetzung aufweisen. Die Glasscheibe kann beispielweise Kalk-Natron-Glas oder Borsilikatglas enthalten oder aus diesen Gläsern bestehen. Die Glasscheibe muss sich natürlich dazu eignen, chemisch vorgespannt zu werden, und insbesondere einen dazu geeigneten Anteil an Alkalielementen, bevorzugt Natrium aufweisen. Die Glasscheibe enthält bevorzugt von 1 Gew-% bis 20 Gew-% Natriumoxid (Na₂O). Die Glasscheibe kann beispielsweise von 40 Gew-% bis 90 Gew-% Siliziumoxid (SiO₂), von 0,5 Gew-% bis 10 Gew-% Aluminiumoxid (Al₂O₃), von 1 Gew-% bis 20 Gew-% Natriumoxid (Na₂O), von 0,1 Gew-% bis 15 Gew-% Kaliumoxid (K₂O), von 0 Gew-% bis 10 Gew-% Magnesiumoxid (MgO), von 0 Gew-% bis 10 Gew-% Kalziumoxid (CaO) und von 0 Gew-% bis 15 Gew-% Boroxid (B₂O₃) enthalten. Die Glasscheibe kann außerdem weitere Bestandteile und Verunreinigungen enthalten.

Es hat sich jedoch überraschend gezeigt, dass bestimmte chemische Zusammensetzungen der ersten Scheibe besonders dazu geeignet sind, einem chemischen Vorspannen unterzogen zu werden. Dies äußert sich in einer hohen Geschwindigkeit des Diffusionsprozesses, was zu einem vorteilhaft geringen Zeitaufwand für den Vorspannprozess führt, und großen Vorspanntiefen (Druckspannungstiefen), was zu stabilen und bruchfesten Gläsern führt. Diese Zusammensetzungen sind im Sinne der Erfindung bevorzugt.

Die Glasscheibe enthält vorteilhafterweise ein Aluminosilikatglas. Die erste Scheibe enthält bevorzugt von 50 Gew-% bis 85 Gew-% Siliziumoxid (SiO₂), von 3 Gew-% bis 10 Gew-% Aluminiumoxid (Al₂O₃), von 8 Gew-% bis 18 Gew-% Natriumoxid (Na₂O), von 5 Gew-% bis 15 Gew-% Kaliumoxid (K₂O), von 4 Gew-% bis 14 Gew-% Magnesiumoxid (MgO), von 0 Gew-% bis 10 Gew-% Kalziumoxid (CaO) und von 0 Gew-% bis 15 Gew-% Boroxid (B₂O₃). Die Glasscheibe kann außerdem weitere Bestandteile und Verunreinigungen enthalten.

Die Glasscheibe enthält besonders bevorzugt zumindest von 55 Gew-% bis 72 Gew-% Siliziumoxid (SiO₂), von 5 Gew-% bis 10 Gew-% Aluminiumoxid (Al₂O₃), von 10 Gew-% bis 15 Gew-% Natriumoxid (Na₂O), von 7 Gew-% bis 12 Gew-% Kaliumoxid (K₂O) und von 6 Gew-% bis 11 Gew-% Magnesiumoxid (MgO). Die Glasscheibe kann außerdem weitere Bestandteile und Verunreinigungen enthalten.

Die Glasscheibe enthält ganz besonders bevorzugt zumindest von 57 Gew-% bis 65 Gew-% Siliziumoxid (SiO₂), von 7 Gew-% bis 9 Gew-% Aluminiumoxid (Al₂O₃), von 12 Gew-% bis 14 Gew-% Natriumoxid (Na₂O), von 8,5 Gew-% bis 10,5 Gew-% Kaliumoxid (K₂O) und von 7,5 Gew-% bis 9,5 Gew-% Magnesiumoxid (MgO). Die Glasscheibe kann außerdem weitere Bestandteile und Verunreinigungen enthalten.

Die Glasscheibe, die polymere Scheibe und/oder die Zwischenschicht können klar und farblos, aber auch getönt oder gefärbt sein.

Die erfindungsgemäße Verbundscheibe kann plan sein. Plane Fahrzeugscheiben treten insbesondere großflächigen Verglasungen von Bussen, Zügen oder Traktoren auf. Die erfindungsgemäße Verbundscheibe kann aber auch leicht oder stark in einer oder in mehreren Richtungen des Raumes gebogen sein. Gebogene Scheiben treten beispielsweise bei Verglasungen im Kraftfahrzeugbereich auf, wobei typische Krümmungsradien im Bereich von etwa 10 cm bis etwa 40 m liegen.

Die Verbundscheibe kann eine funktionelle Beschichtung aufweisen, beispielsweise eine IR-reflektierende oder absorbierende Beschichtung, eine UV-reflektierende oder absorbierende Beschichtung, eine farbgebende Beschichtung, eine Beschichtung niedriger Emissivität (sogenannte Low-E-Beschichtung), eine heizbare Beschichtung, eine Beschichtung mit Antennenfunktion, eine Beschichtung mit splitterbindender Wirkung (splitterbindende Beschichtung) oder eine Beschichtung zur Abschirmung von elektromagnetischer Strahlung, beispielsweise Radarstrahlung. In einer bevorzugten Ausgestaltung ist die erfindungsgemäße Beschichtung eine elektrisch leitfähige Beschichtung. Dadurch kann insbesondere eine Beschichtung niedriger Emissivität, eine IR-reflektierende oder eine beheizbare Beschichtung realisiert werden

Die funktionelle Beschichtung ist bevorzugt auf einer Oberfläche der polymeren Scheibe oder auf einer Trägerfolie innerhalb der Zwischenschicht aufgebracht. Die Trägerfolie enthält bevorzugt zumindest Polyethylenterephthalat (PET), Polyethylen (PE) oder Gemische oder Copolymere oder Derivate davon und weist bevorzugt eine Dicke von 5 µm bis 500 µm, besonders bevorzugt von 10 µm bis 200 µm auf. Das ist besonders vorteilhaft für die Handhabung die Stabilität und die optischen Eigenschaften der Trägerfolie.

In einer vorteilhaften Weiterbildung der Erfindung ist die von der Glasscheibe abgewandte Oberfläche der polymeren Scheibe mit einer Schutzbeschichtung versehen. Dadurch wird die Kratzfestigkeit der Scheibe weiter erhöht. Bevorzugt werden thermisch härtende oder UVhärtende Lacksysteme auf Basis von Polysiloxanen, Polyacrylaten, Polymethacrylaten und/oder Polyurethanen verwendet. Die Schutzbeschichtung hat bevorzugt eine Schichtdicke von 1 µm bis 50 µm, besonders bevorzugt von 2 µm bis 25 µm.

Die Erfindung umfasst weiter ein Verfahren zur Herstellung einer erfindungsgemäßen Verbundscheibe, wobei
- eine polymere Scheibe hergestellt wird,
- eine Glasscheibe bereitgestellt wird und
- die polymere Scheibe mit der Glasscheibe flächig verbunden wird.

Die polymere Scheibe wird bevorzugt durch Spritzgießen hergestellt.

Die Glasscheibe wird bevorzugt chemisch vorgespannt.

Die Glasscheibe wird bevorzugt als Flachglas hergestellt und auf die gewünschte Größe und Form zurechtgeschnitten. Weist die zu fertigende Verbundscheibe nur eine Krümmung in einer Richtung auf, so kann die plane Scheibe aufgrund ihrer geringen Dicke direkt beim Verbinden mit der polymeren Scheibe gebogen werden.

Besonders im Kraftfahrzeugbereich treten aber in der Regel Biegungen in mehreren Richtungen des Raums auf. In diesem Fall erhält die Glasscheibe bevorzugt noch vor dem chemischen Vorspannen ihre endgültige dreidimensionale Form. Dafür wird die Glasscheibe einem Biegeprozess bei erhöhten Temperaturen unterzogen, beispielsweise bei 500°C bis 700°C.

Nach dem Biegen wird die Scheibe langsam abgekühlt. Ein zu schnelles Abkühlen erzeugt thermische Spannungen in der Scheibe, die beim späteren chemischen Tempern zu Formänderungen führen können. Die Abkühlrate beträgt bevorzugt bis zur Abkühlung auf eine Temperatur von 400 °C bevorzugt von 0,05 °C/sec bis 0,5 °C/sec, besonders bevorzugt von 0,1-0,3 °C/sec. Durch ein derartig langsames Abkühlen können thermische Spannungen im Glas vermieden werden, welche insbesondere zu optischen Mängeln führen sowie zu einer negativen Beeinträchtigung der späteren chemischen Vorspannung. Es kann danach weiter abgekühlt werden, auch mit höheren Abkühlraten, weil unterhalb 400 °C die Gefahr der Erzeugung thermischen Spannungen gering ist.

Das chemische Vorspannen erfolgt bevorzugt bei einer Temperatur von 300 °C bis 600 °C, besonders bevorzugt von 400 °C bis 500 °C. Die Glasscheibe wird dabei mit einer Salzschmelze behandelt, beispielsweise in die Salzschmelze eingetaucht. Während der Behandlung werden insbesondere Natrium-Ionen des Glases durch größere Ionen, insbesondere größere Alkali-Ionen ausgetauscht, wobei die gewünschten Oberflächen-Druckspannungen entstehen. Die Salzschmelze ist bevorzugt die Schmelze eines Kaliumsalzes, besonders bevorzugt Kaliumnitrat (KNO₃) oder Kaliumsulfat (KSO₄), ganz besonders bevorzugt Kaliumnitrat (KNO₃).

Der Ionenaustauch wird durch die Diffusion der Alkali-Ionen bestimmt. Die gewünschten Werte für die Oberflächen-Druckspannungen und Druckspannungstiefen können daher insbesondere durch die Temperatur und die Dauer des Vorspannprozesses eingestellt werden. Übliche Zeiten für die Dauer betragen von 2 Stunden bis 48 Stunden.

Nach der Behandlung mit der Salzschmelze wird die Scheibe auf Raumtemperatur abgekühlt. Anschließend wird die Scheibe gereinigt, bevorzugt mit Schwefelsäure (H₂SO₄).

Die polymere Scheibe und die Glasscheibe werden durch Lamination über eine thermoplastische Zwischenschicht miteinander verbunden. Die Herstellung des Verbundglases durch Lamination erfolgt mit an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Glasscheibe und polymer Scheibe erfolgt dabei üblicherweise unter Einwirkung von Hitze, Vakuum und / oder Druck.

Die erfindungsgemäße Verbundscheibe wird bevorzugt in Fortbewegungsmitteln für den Verkehr auf dem Lande, in der Luft oder zu Wasser verwendet, insbesondere in Zügen, Schiffen und Kraftfahrzeugen, beispielsweise als Windschutzscheibe, Dachscheibe, Heckscheibe oder Seitenscheibe.

Die Erfindung umfasst weiter die Verwendung einer chemisch vorgespannten Glasscheibe mit einer Dicke von kleiner oder gleich 1 mm, in einer Verbundscheibe zur Erhöhung der Stabilität Kratzfestigkeit einer polymeren Scheibe, bevorzugt Fahrzeugscheibe, besonders bevorzugt Windschutzscheibe, Seitenscheibe, Heckscheibe oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen Verbundscheibe,
- Fig. 2: einen Querschnitt durch eine weitere Ausgestaltung der Verbundscheibe, welche nicht Teil der Erfindung ist,
- Fig. 3: ein schematisches Diagramm der Bruchstabilität von chemisch vorgespanntem und nicht vorgespanntem Glass in Abhängigkeit von der Kratzertiefe und
- Fig. 4: ein Flussdiagramm einer Ausführungsform des erfindungsgemäßen Verfahrens.

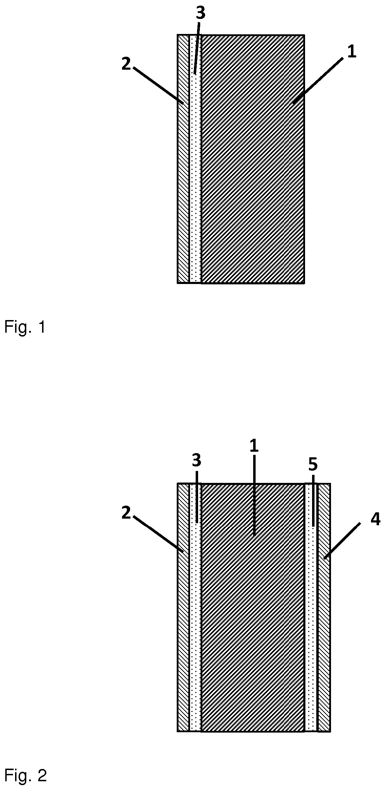

Fig. 1 zeigt eine erfindungsgemäße Verbundscheibe, welche aus einer polymeren Scheibe 1 und einer Glasscheibe 2 besteht, die über eine Zwischenschicht 3 miteinander verbunden sind. Die Verbundscheibe ist beispielsweise als Seitenscheibe eines Kraftfahrzeugs vorgesehen, wobei die polymere Scheibe 1 in Einbaulage die Innenscheibe ist und die Glasscheibe 2 die Außenscheibe. Die polymere Scheibe 1 ist also dem Innenraum des Kraftfahrzeugs zugewandt und die Glasscheibe 2 der äußeren Umgebung.

Die polymere Scheibe 1 besteht aus Polycarbonat (PC) und weist eine Dicke von 3 mm auf. Durch die polymere Scheibe 1 hat die Verbundscheibe ein vorteilhaft geringes Gewicht. Die Glasscheibe 2 weist eine Dicke von beispielsweise 0,5 mm auf. Die dünne Glasscheibe 2 erhöht das Gewicht der Verbundscheibe nur geringfügig, verbessert aber signifikant die Stabilität und Kratzfestigkeit sowie die akustischen Eigenschaften.

Die Zwischenschicht 3 besteht aus Polyurethan (PU) mit einer Dicke von etwa 0,8 mm. Beim Laminieren der Polyurethan-Zwischenschicht und der Polycarbonat-Scheibe tritt überraschend eine verminderte Diffusion zwischen Zwischenschicht 3 und polymerer Scheibe 1 auf als bei vielen anderen üblichen thermoplastischen Materialien, wie beispielsweise PVB.

Um eine verbesserte Stabilität zu erreichen, ist die Glasscheibe 2 chemisch vorgespannt. Die Druckspannungstiefe beträgt größer 50 µm, beispielsweise etwa 100 µm, und die Oberflächendruckspannung beträgt beispielsweise 250 MPa, wobei auch wesentlich höhere Werte, beispielsweise etwa 400 MPa, realisierbar sind und im Einzelfall gewünscht sein können. Aufgrund der geringen Dicke der Glasscheibe 2 wäre eine entsprechende Vorspannung durch thermische Verfahren nicht zu erreichen.

Die chemische Zusammensetzung der Glasscheibe 2 ist in Tabelle 1 dargestellt, wobei der fehlende Anteil durch Beimengungen und Verunreinigungen hervorgerufen wird. Die Zusammensetzung eignet sich besonders dafür, mit einer chemischen Vorspannung beaufschlagt zu werden.

**Tabelle 1**

| **Bestandteil** | **Gew.-%** |
|---|---|
| SiO₂ | 60,7 |
| Al₂O₃ | 7,7 |
| Na₂O | 13,1 |
| K₂O | 9,6 |
| MgO | 8,4 |

Fig. 2 zeigt eine weitere Ausgestaltung der Verbundscheibe, welche nicht Teil der Erfindung ist. Die polymere Scheibe 1 ist über eine erste Zwischenschicht 3 mit einer ersten Glasscheibe 2 und über eine zweite Zwischenschicht 5 mit einer zweiten Glasscheibe 4 verbunden. Die Glasscheiben 2,4, welche beispielsweise eine Dicke von 0,2 mm aufweisen, schützen die polymere Scheibe 1 beidseitig vor Verkratzen und verbessern die akustischen Eigenschaften und die Stabilität der Scheibe.

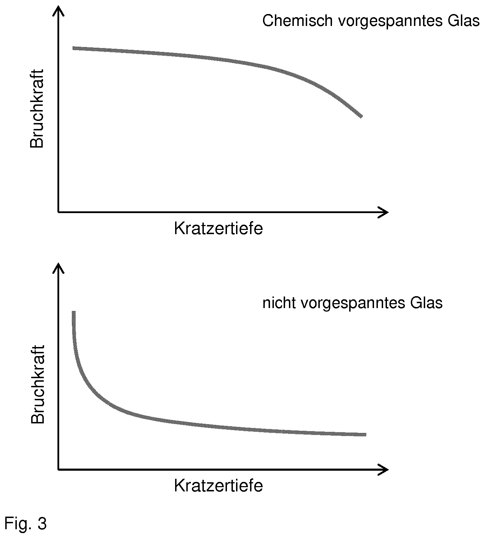

Fig. 3 zeigt einen Vergleich zwischen der Bruchstabilität von chemisch vorgespanntem und nicht vorgespanntem Glas in Form eines schematischen Diagramms. Das Diagramm gibt schematisch den Verlauf in Vergleichsversuchen gemessenen Werten wieder. Bei den Messungen wurden auf chemisch vorgespannten und nichtvorgespannten Glasscheiben mittels Schleifpapier unterschiedlicher Körnung Kratzer erzeugt. Daraus ergibt sich die Abszissenachse des Diagramms (Kratzertiefe), wobei die Abszissenachsen der beiden Diagramme maßstabsgleich sind. Es wurde dann die Kraft gemessen, welche nötig ist, um die Glasscheibe zu zerbrechen.

Es ist ersichtlich, dass die Bruchstabilität von nicht vorgespanntem Glas schon bei Kratzern geringer Tiefe deutlich leidet. Dagegen haben Kratzer von geringer und mittlerer Tiefe einen vernachlässigbaren Einfluss auf die Bruchstabilität von chemisch vorgespanntem Glas, dessen Bruchstabilität erst bei Kratzern größerer Tiefe etwas verringert wird.

Das Diagramm veranschaulicht deutlich einen Vorteil der Verwendung von chemisch vorgespanntem Glass in der erfindungsgemäßen Verbundscheibe im Hinblick auf die Bruchstabilität. Dieses Ergebnis war für den Fachmann unerwartet und überraschend.

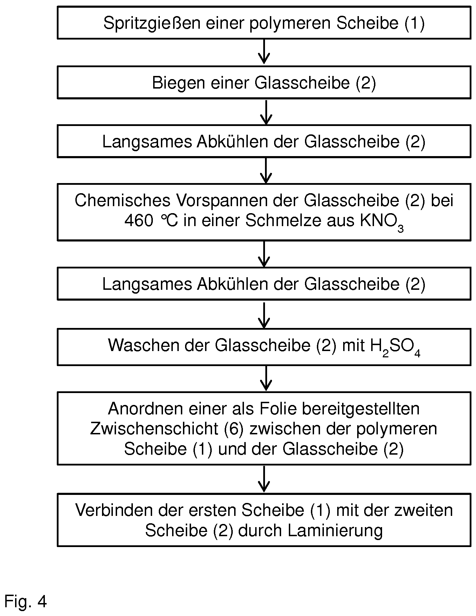

Fig. 4 zeigt ein Flussdiagramm eines Ausführungsbeispiels des erfindungsgemäßen Verfahrens zur Herstellung eines erfindungsgemäßen Verbundglases. Eine polymere Scheibe 1 aus Polycarbonat wird im Spritzguss-Verfahren hergestellt. Eine Glasscheibe 2 wird als planes Floatglas mit der chemischen Zusammensetzung aus Tabelle 1 bereitgestellt. Die Glasscheibe 2 wird zunächst durch einen Biegeprozess in ihre endgültige dreidimensionale Form gebracht. Die Glasscheibe 2 wird nach dem Biegen langsam abgekühlt, um thermische Spannungen zu vermeiden. Eine geeignete Abkühlrate beträgt beispielsweise 0,1 °C/sec. Die Glasscheibe 2 wird anschließend für einen Zeitraum von einigen Stunden, beispielsweise 4 Stunden, bei einer Temperatur von 460 °C mit einer Schmelze aus Kaliumnitrat behandelt und dabei chemisch vorgespannt. Die Behandlung bewirkt einen diffusionsgetriebenen Austausch von Natriumionen durch größere Kaliumionen über die Oberflächen des Glases. Dadurch werden Oberflächendruckspannungen erzeugt. Die Glasscheibe 2 wird anschließend abgekühlt und dann mit Schwefelsäure gewaschen, um Rückstände des Kaliumnitrats zu entfernen.

Die polymere Scheibe 1 und die Glasscheibe 2 und eine zwischen ihnen positionierte thermoplastische Folie aus PU werden als Stapel angeordnet. Anschließend wird der Scheibenverbund laminiert, beispielsweise durch ein Vakuumsack-Verfahren, wobei die thermoplastische Folie eine Zwischenschicht 3 ausbildet.

### Bezugszeichenliste:

- (1): polymere Scheibe
- (2): Glasscheibe
- (3): Zwischenschicht
- (4): zweite Glasscheibe
- (5): zweite Zwischenschicht

## Patentansprüche

1. Verbundscheibe für Fahrzeuge, bestehend aus
- einer polymeren Scheibe (1) mit einer Dicke von 1,5 mm bis 10 mm,
- einer mit der polymeren Scheibe (1) flächig verbundenen Glasscheibe (2) mit einer Dicke von kleiner oder gleich 1 mm,
- einer thermoplastischen Zwischenschicht (3), wobei die polymere Scheibe (1) und die Glasscheibe (2) über die Zwischenschicht (3) verbunden sind,
wobei die voneinander abgewandten Oberflächen der Glasscheibe (2) und der polymeren Scheibe (1) die Außenflächen der Verbundscheibe bilden, wobei die Bestandteile der Verbundscheibe mit Beschichtungen versehen sein können,
wobei die polymere Scheibe (1) zumindest Polycarbonat (PC) und/oder Polymethylmethacrylat (PMMA) enthält und wobei die Glasscheibe (2) eine chemisch vorgespannte Glasscheibe ist.

2. Verbundscheibe nach Anspruch 1, wobei die Glasscheibe (2) eine Dicke von 0,1 mm bis 1 mm, bevorzugt von 0,2 bis 0,8 mm, besonders bevorzugt von 0,4 mm bis 0,7 mm aufweist.

3. Verbundscheibe nach einem der Ansprüche 1 bis 2, wobei die polymere Scheibe (1) eine Dicke von 2 mm bis 5 mm aufweist, bevorzugt von 2,5 mm bis 4 mm, besonders bevorzugt von 3 mm bis 4 mm.

4. Verbundscheibe nach einem der Ansprüche 1 bis 3, wobei die thermoplastische Zwischenschicht (3) eine Dicke von 0,2 mm bis 1 mm aufweist.

5. Verbundscheibe nach Anspruch 4, wobei die thermoplastische Zwischenschicht (3) zumindest Polyurethan oder Derivate davon enthält.

6. Verbundscheibe nach Anspruch 4 oder 5, wobei die thermoplastische Zwischenschicht (3) eine geräuschmindernde Wirkung aufweist.

7. Verbundscheibe nach einem der Ansprüche 1 bis 6, wobei die Glasscheibe (2) eine Oberflächendruckspannung von größer als 100 MPa, bevorzugt größer als 250 MPa und besonders bevorzugt größer 350 MPa aufweist.

8. Verbundscheibe nach einem der Ansprüche 1 bis 7, wobei die Druckspannungstiefe der Glasscheibe (2) mindestens ein Zehntel, bevorzugt mindestens ein Sechstel, der Dicke der Glasscheibe (2) beträgt.

9. Verbundscheibe nach einem der Ansprüche 1 bis 8, wobei die Glasscheibe (2) von 55 Gew-% bis 72 Gew-% Siliziumoxid (SiO₂), von 5 Gew-% bis 10 Gew-% Aluminiumoxid (Al₂O₃), von 10 Gew-% bis 15 Gew-% Natriumoxid (Na₂O), von 7 Gew-% bis 12 Gew-% Kaliumoxid (K₂O) und von 6 Gew-% bis 11 Gew-% Magnesiumoxid (MgO) enthält.

10. Verfahren zur Herstellung einer Verbundscheibe nach einem der Ansprüche 1 bis 9, wobei
- eine polymere Scheibe (1) hergestellt wird,
- eine Glasscheibe (2) chemisch vorgespannt wird und
- die polymere Scheibe (1) mit der Glasscheibe (2) flächig verbunden wird.

11. Verfahren nach Anspruch 10, wobei die Glasscheibe (2)
a) bei einer Temperatur von 500°C bis 700°C gebogen wird und die anschließende Abkühlrate bis auf eine Temperatur von 400 °C von 0,05 °C/sec bis 0,5 °C/sec beträgt und
b) chemisch vorgespannt wird.

12. Verfahren nach Anspruch 10 oder 11, wobei die Glasscheibe (2) in einer Salzschmelze, bevorzugt einer Kaliumnitrat (KNO₃)-Schmelze, bei einer Temperatur von 300°C bis 600°C während einer Dauer von 2 Stunden bis 48 Stunden chemisch vorgespannt wird.

13. Verwendung einer chemisch vorgespannten Glasscheibe (2) in einer Verbundscheibe nach einem der Ansprüche 1 bis 9 zur Erhöhung der Stabilität und Kratzfestigkeit einer polymeren Scheibe, bevorzugt Fahrzeugscheibe, besonders bevorzugt Windschutzscheibe, Seitenscheibe, Heckscheibe oder Dachscheibe.

## Claims

1. Composite pane for vehicles, consisting of
- a polymeric pane (1) having a thickness of 1.5 mm to 10 mm
- a glass pane (2) having a thickness less than or equal to 1 mm bonded in a planar manner to the polymeric pane (1),
- a thermoplastic intermediate layer, wherein the polymeric pane (1) and the glass pane (2) are bonded via the thermoplastic intermediate layer (3),
wherein the surfaces of the glass pane (2) and of the polymeric pane (1) facing away from each other form the outer surfaces of the composite pane, wherein the components of the composite pane can be provided with coatings,
wherein the polymeric pane (1) contains at least polycarbonate (PC) and/or polymethyl methacrylate (PMMA) and wherein the glass pane (2) is a chemically tempered glass pane.

2. Composite pane according to claim 1, wherein the glass pane (2) has a thickness of 0.1 mm to 1 mm, preferably of 0.2 to 0.8 mm, particularly preferably of 0.4 mm to 0.7 mm.

3. Composite pane according to one of claims 1 through 2, wherein the polymeric pane (1) has a thickness of 2 mm to 5 mm, preferably of 2.5 mm to 4 mm, particularly preferably of 3 mm to 4 mm.

4. Composite pane according to one of claims 1 through 3, wherein the thermoplastic intermediate layer (3) has a thickness of 0.2 mm to 1 mm.

5. Composite pane according to claim 4, wherein the thermoplastic intermediate layer (3) contains at least polyurethane or derivatives thereof.

6. Composite pane according to claim 4 or 5, wherein the thermoplastic intermediate layer (3) has a noise reducing effect.

7. Composite pane according to one of claims 1 through 6, wherein the glass pane (2) has a surface compressive stress greater than 100 MPa, preferably greater than 250 MPa, and particularly preferably greater than 350 MPa.

8. Composite pane according to one of claims 1 through 7, wherein the compressive stress depth of the glass pane (2) is at least one tenth, preferably at least one sixth, of the thickness of the glass pane (2).

9. Composite pane according to one of claims 1 through 8, wherein the glass pane (2) contains from 55 wt.-% to 72 wt.-% silicon oxide (SiO₂), from 5 wt.-% to 10 wt.-% aluminum oxide (Al₂O₃), from 10 wt.-% to 15 wt.-% sodium oxide (Na₂O), from 7 wt.-% to 12 wt.-% potassium oxide (K₂O), and from 6 wt.-% to 11 wt.-% magnesium oxide (MgO).

10. Method for producing a composite pane according to one of claims 1 through 9, wherein
- a polymeric pane (1) is produced,
- a glass pane (2) is chemically tempered, and
- the polymeric pane (1) is bonded to the glass pane (2) in a planar manner.

11. Method according to claim 10, wherein the glass pane (2)
a) is bent at a temperature of 500°C to 700°C and the subsequent cooling rate to a temperature of 400 °C is from 0.05 °C/sec to 0.5 °C/sec and
b) is chemically tempered.

12. Method according to claim 10 or 11, wherein the glass pane (2) is chemically tempered in a salt melt, preferably a potassium nitrate (KNO₃) melt, at a temperature of 300°C to 600°C for a period of 2 hours to 48 hours.

13. Use of a chemically tempered glass pane (2) in a composite pane according to one of claims 1 through 9 to increase the stability and scratch resistance of a polymeric pane, preferably a vehicle pane, particularly preferably a windshield, side window, rear window, or roof panel.

## Revendications

1. Vitre composite pour véhicules, constituée
- d'une vitre polymère (1) d'une épaisseur de 1,5 mm à 10 mm
- d'une vitre en verre (2) d'une épaisseur inférieure ou égale à 1 mm collée de manière plane à la vitre polymère (1),
- une couche intermédiaire thermoplastique, dans laquelle la vitre polymère (1) et la vitre en verre (2) sont liées par une couche intermédiaire thermoplastique (3),
dans laquelle les surfaces de la vitre en verre et de la vitre polymère qui se font face forment les surfaces extérieures de la vitre composite, dans laquelle les composants de la vitre composite peuvent être pourvus de revêtements,
dans lequel la vitre polymère (1) contient au moins du polycarbonate (PC) et/ou du polyméthacrylate de méthyle (PMMA) et dans lequel la vitre en verre (2) est une vitre en verre trempé chimiquement.

2. Vitre composite selon la revendication 1, dans laquelle la vitre en verre (2) a une épaisseur de 0,1 mm à 1 mm, de préférence de 0,2 à 0,8 mm, de préférence encore de 0,4 mm à 0,7 mm.

3. Vitre composite selon l'une des revendications 1 à 2, dans lequel la vitre polymère (1) a une épaisseur de 2 mm à 5 mm, de préférence de 2,5 mm à 4 mm, de préférence encore de 3 mm à 4 mm.

4. Vitre composite selon l'une des revendications 1 à 3, dans laquelle la couche intermédiaire thermoplastique (3) a une épaisseur de 0,2 mm à 1 mm.

5. Vitre composite selon la revendication 4, dans laquelle la couche intermédiaire thermoplastique (3) contient au moins du polyuréthane ou des dérivés de celui-ci.

6. Vitre composite selon la revendication 4 ou 5, dans lequel la couche intermédiaire thermoplastique (3) a un effet réducteur de bruit.

7. Vitre composite selon l'une des revendications 1 à 6, dans lequel la vitre en verre (2) a une contrainte de compression superficielle supérieure à 100 MPa, de préférence supérieure à 250 MPa, et de préférence encore supérieure à 350 MPa.

8. Vitre composite selon l'une des revendications 1 à 7, dans laquelle la profondeur de contrainte de compression de la vitre en verre (2) est d'au moins un dixième, de préférence d'au moins un sixième, de l'épaisseur de la vitre (2) en verre.

9. Vitre composite selon l'une des revendications 1 à 8, dans laquelle la vitre en verre (2) contient de 55 % en poids à 72 % en poids d'oxyde de silicium (SiO₂), de 5 % en poids à 10 % en poids d'oxyde d'aluminium (Al₂O₃₎, de 10 % en poids à 15 % en poids d'oxyde de sodium (Na₂O), de 7 % en poids à 12 % en poids d'oxyde de potassium (K₂O), et de 6 % en poids à 11 % en poids d'oxyde de magnésium (MgO).

10. Procédé de fabrication d'une vitre composite selon l'une des revendications 1 à 9, dans lequel
- une vitre polymère (1) est produit,
- une vitre en verre (2) est trempé chimiquement, et
- la vitre polymère (1) est collé à la vitre en verre (2) de manière plane.

11. Procédé selon la revendication 10, dans lequel la vitre en verre (2)
a) est bombée à une température de 500 °C à 700 °C et la vitesse de refroidissement ultérieure jusqu'à une température de 400 °C est de 0,05 °C/s à 0,5 °C/s et
b) est trempée chimiquement.

12. Procédé selon la revendication 10 ou 11, dans lequel la vitre en verre (2) est trempée chimiquement dans un sel fondu, de préférence un nitrate de potassium (KNO₃) fondu, à une température de 300°C à 600°C pendant une période de 2 heures à 48 heures.

13. Utilisation d'une vitre en verre trempée chimiquement (2) dans une vitre composite selon l'une des revendications 1 à 9 pour augmenter la stabilité et la résistance aux rayures d'une vitre polymère, de préférence d'une vitre de véhicule, de préférence d'un pare-brise, d'une vitre latérale, d'une lunette arrière ou d'un panneau de toit.
